# EUROPEAN PATENT SPECIFICATION

(11) **EP 3 428 093 B1**
(45) Date of publication and mention of the grant of the patent: **15.09.2021**
(21) Application number: 17865269.9
(22) Date of filing: 25.07.2017
(51) Int. Cl.: B65G 63/04, B61B 13/06, B61D 3/20, B61D 47/00

(54) **AERIAL RAILWAY-BASED MULTIMODAL TRANSPORT INTERCONNECTING SYSTEM**
SEILBAHNBASIERTES MULTIMODALES TRANSPORTVERBINDUNGSSYSTEM
SYSTÈME D'INTERCONNEXION DE TRANSPORT MULTIMODAL À BASE DE VOIE FERROVIAIRE AÉRIEN

(30) Priority: 24.10.2016 CN 201610935898
(43) Date of publication of application: 16.01.2019
(73) Proprietor: CRRC Yangtze Co., Ltd., Wuhan, Hubei 430212 (CN)
(72) Inventor: SU, Lijie, Wuhan Hubei 430212 (CN); HUANG, Heng, Wuhan Hubei 430212 (CN); PENG, Quanhai, Wuhan Hubei 430212 (CN); HU, Yueming, Wuhan Hubei 430212 (CN); SUN, Xianjun, Wuhan Hubei 430212 (CN); CAI, Fan, Wuhan Hubei 430212 (CN); ZHANG, Nan, Wuhan Hubei 430212 (CN); XU, Li, Wuhan Hubei 430212 (CN); LIU, Zhiqiang, Wuhan Hubei 430212 (CN); FENG, Zhi, Wuhan Hubei 430212 (CN); LI, Qiaoneng, Wuhan Hubei 430212 (CN)
(74) Representative: Bandpay & Greuter
(86) International application number: PCT/CN2017/094334
(87) International publication number: WO 2018/076836

(56) References cited:
- WO-A1-97/07007
- WO-A1-97/09260
- WO-A1-2011/059134
- CN-A- 106 379 747
- CN-Y- 201 296 509
- CN-Y- 201 296 509
- DE-C1- 4 332 232
- DE-U1- 29 922 538
- JP-A- H10 101 231
- JP-B2- 5 581 048
- US-A1- 2005 158 158
- US-B2- 8 746 153

## Description

### TECHNICAL FIELD

The embodiments of the present invention relate to the technical field of cargo transportation, and in particular to a sky rail-based multimodal transportation interworking system.

### BACKGROUND OF THE INVENTION

In modern logistics development, how to improve the transportation efficiency and reduce the logistics costs has become an important issue. Multimodal transportation, as a high-efficiency mode of transportation, represents the development direction of the logistics industry. In China's Medium- and Long-Term Development Plan for Logistics Industry (2014-2020), it has been stressed 18 times to greatly develop multimodal transportation, and multimodal transportation is placed at the strategic level in development of the logistics industry. In addition, the 13^{th} Five-Year Development Plan of China's Ministry of Transport has explicitly put forward a development goal of "seamless connection" of cargo transportation; under this Plan, multimodal transport equipment will be developed greatly, efforts should be made to build a multimodal transportation organization system in which facilities are connected efficiently, hubs transfer rapidly, information is interconnected and shared, equipment is standard and professional and services are integrally matched, and priority should be given to the development of a multimodal transportation system which takes goods loading devices and semitrailers as standard carrier units.

Goods loading device multimodal transportation, as an advanced mode of transportation, has become a significant symbol of modern international cargo transportation. So far multiple modes of transportation, such as road, railway, water transportation and civil aviation in our country have achieved a huge scale, whereas these modes of transportation develop in a scattered way and fail to be linked in harmony. Road goods loading device transportation trucks (hereinafter abbreviated as road container trucks) are the only shuttle tool for effecting goods loading device drayage between ports and railway, air logistics centers. This single mode of transportation is inefficient and causes big pressure and environmental pollution to the ground transportation. As a result, the national comprehensive multimodal transportation develops slowly, and the development of the national comprehensive transportation system is affected.

Therefore, "to accelerate the multimodal transportation facility construction, build collection and distribution channels with matched capabilities, provide modem transit facilities and establish a multimodal transportation information platform" has become important issues for our country to establish a multimodal transportation system.
Document WO 97/07007 A1 discloses a method of transporting shipping containers.
Document US 2005/158158 A1 discloses a method and an apparatus for railroad transport.

### SUMMARY OF THE INVENTION

Embodiments of the disclosure provide a sky rail-based multimodal transportation interworking system, which achieves technical effects of multimodal transportation between ports and railways, air logistics centers.

The present application provides a sky rail-based multimodal transportation interworking system, which at least comprises an elevated pillar, a rail system, a cargo vehicle, a transfer apparatus and a processor,
a rail beam is provided on the elevated pillar;
the cargo vehicle is movably provided on the rail beam of the rail system;
the transfer apparatus is used for transferring a goods loading device from a transportation tool to the cargo vehicle and loading the goods loading device onto the cargo vehicle, or unloading the goods loading device from the cargo vehicle and conveying the goods loading device onto the transportation tool;
the processor is connected to the cargo vehicle and the transfer apparatus so as to control the transfer apparatus to transfer the goods loading device, and to control the cargo vehicle to move on the rail beam after the goods loading device is secured onto the cargo vehicle;
as the goods loading device needs to be transferred, the transfer apparatus transfers the goods loading device from the transportation tool to the cargo vehicle and loads the goods loading device onto the cargo vehicle, and the processor controls the cargo vehicle to move on the rail beam, or the transfer apparatus unloads the goods loading device from the cargo vehicle and conveys the goods loading device onto the transportation tool.

According to the invention, the cargo vehicle comprises a cargo vehicle bogie, a suspension device, and an integrated spreader;
the bogie comprises: two train frames disposed oppositely to each other, a cross beam fixedly connected to the two train frames, at least two travelling wheels, and a travelling wheel driving device; the at least two travelling wheels are rotatably disposed on opposite surfaces of the two train frames, respectively; the travelling wheel driving device is fixed onto the train frame and is connected to the at least two travelling wheels for driving the at least two travelling wheels to rotate;
one end of the suspension device is disposed on the cross beam, and the other end thereof is fixed onto the integrated spreader;
the suspension-type rail beam is mounted on the elevated pillar on which two travel rails are disposed;
the at least two travelling wheels of the cargo vehicle are provided on the two travel rails respectively; and
the processor is connected to the travelling wheel driving device.

Preferably, the cargo vehicle bogie further comprises: multiple guide wheels fixed respectively onto the two train frames, and a rotation plane of the guide wheels is perpendicular to a rotation plane of the travelling wheels.

Preferably, the cargo vehicle bogie further comprises: multiple stabilizing wheels mounted on opposite surfaces of the two train frames.

Preferably, the suspension device comprises a center pin, a top plate, a suspension arm, and a mounting seat; and wherein one end of the center pin is fixed onto the top plate, and the other end thereof is disposed on the cross beam; the suspension arm is disposed between the top plate and the mounting seat. The mounting seat is fixedly connected to the integrated spreader.

Preferably, the integrated spreader comprises: a steel spreader body, a group of spin lock mechanisms, and a spreader suspension device;
the group of spin lock mechanisms comprises a first spin lock mechanism, and a second spin lock mechanism which is different from the first spin lock mechanism in size; the first spin lock mechanism comprises a first spin lock and a first control electric motor, and the first control electric motor controls the first spin lock to rotate; the second spin lock mechanism comprises a second spin lock and a second control electric motor, and the second control electric motor controls the second spin lock to rotate;
the controller is connected to the first control electric motor and the second control electric motor.

Preferably, the transportation system further comprises a turnout abutting the suspension-type rail beam. The turnout comprises a movable arc travel frame, a movable straight travel frame and an abutment driving device; the arc travel frame and the straight travel frame are provided with an arc travel rail and a straight travel rail respectively; the abutment driving device drives the arc travel frame and the straight travel frame to move, so that the arc travel frame or the straight travel frame abuts the suspension-type rail beam; and
the controller is connected to the abutment driving device.

Preferably, the transfer apparatus at least comprises a conveyance mechanism, a grab mechanism and a lift mechanism; the grab mechanism places the goods loading device on the conveyance mechanism; the conveyance mechanism transports the goods loading device to the lift mechanism; the lift mechanism raises or lowers the goods loading device, and loads the goods loading device onto or unloads the goods loading device from the cargo vehicle; and the processor is communicatively connected to the conveyance mechanism, the grab mechanism and the lift mechanism.

Preferably, the conveyance mechanism at least comprises: a first frame, a chain, a first group of rotation shafts and a power outputting device; the first group of rotation shafts is disposed on the first frame; each rotation shaft of the first group of rotation shafts is provided with a gear; the chain is fitted around the gears to drive each rotation shaft of the first group of rotation shafts to rotate; and a power output end of the power outputting device is connected to the chain.

Preferably, the transfer apparatus comprises: an underframe, a lifting device, a lifting table, a lift driving device, multiple travel wheels, and a travel driving device;
the lifting device is connected between the underframe and the lifting table;
the lift driving device is connected to the lifting device for driving the lifting device to raise or lower the lifting table;
the multiple travel wheels are fixed under the underframe;
the travel driving device is fixed on the underframe and connected to the travel wheels, for driving the travel wheels to rotate; and
the processor is communicatively connected to the lift driving device and the travel driving device.

The present application has the following advantageous effects:

By a rail system connecting various ports with railway and air logistics centers, and a processor controlling a transfer apparatus to transfer a goods loading device and controlling a cargo vehicle to move on the rail system after the goods loading device is secured on the cargo vehicle, multimodal transportation between ports and railway, air logistics centers is achieved. In addition, by replacing road goods loading device transportation trucks with the rail system, not only the transport efficiency is increased, but also the pressure on the ground transportation is reduced and the environment is also protected.

### BRIEF DESCRIPTION OF THE DRAWINGS

In order to illustrate technical solutions in the prior art or embodiments of the present invention more clearly, a brief description is made below to the drawings used in the description of the embodiments. Apparently, the drawings to be described below are merely some embodiments of the present invention.
Fig. 1 shows a schematic structural view of a sky rail-based multimodal transportation interworking system in accordance with some embodiments of the present application;
Figs. 2 and 3 show a front view and a side view of a transportation system of the sky rail-based multimodal transportation interworking system in Fig. 1 respectively;
Fig. 4 shows a perspective view of a cargo vehicle of the transportation system in Fig. 2 disposed on rail beams;
Fig. 5 shows a perspective view of a bogie of the cargo vehicle in Fig. 4;
Figs. 6 and 7 show a front view and a side view of a suspension device of the cargo vehicle in Fig. 4 respectively;
Figs. 8 to 10 show a schematic structural view of an integrated spreader of the cargo vehicle in Fig. 4 respectively;
Figs. 11 and 12 shows a schematic structural view of a suspension-type rail beam of the transportation system respectively;
Figs. 13 to 15 show a schematic structural view of a suspension-type turnout of the transportation system respectively; and
Figs. 16 to 20 show schematic structural views of three embodiments of a transfer apparatus of the sky rail-based multimodal transportation interworking system in Fig. 1.

### DETAILED DESCRIPTION OF THE INVENTION

By providing a sky rail-based multimodal transportation interworking system, embodiments of the present application achieve such technical effect as multimodal transportation between ports and railway, air logistics centers.

Technical solutions in the embodiments of the present application are all aimed to solve the above technical problem. A general idea is as below:
a rail system is provided to connect various ports with railways, air logistics centers, and a processor is provided to control a transfer apparatus to transfer a goods loading device and control a cargo vehicle to move on a rail beam after the goods loading device is secured onto the cargo vehicle. In this way, multimodal transportation between ports and railway, air logistics centers is achieved. In addition, by replacing road goods loading device transportation trucks with the rail system, not only the transport efficiency is increased, but also the pressure on the ground transportation is reduced and the environment is also protected.

To better understand the foregoing technical solutions, detailed description will be made to the technical solution with reference to the accompanying drawings and specific embodiments.

In order to solve the technical problem in the prior art that dock congestion and field shortage are caused because more vehicles, yards and workers need to be provided for increasing the efficiency of loading and unloading operations, the present application provides a sky rail-based multimodal transportation interworking system, which is illustrated below.

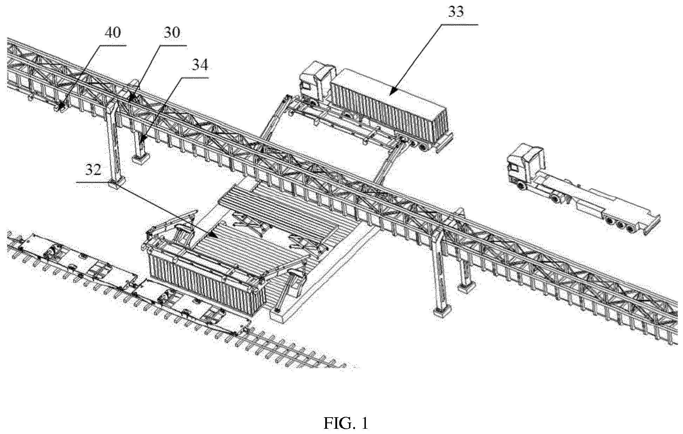

As shown in Fig. 1, the sky rail-based multimodal transportation interworking system at least comprises a transportation system, a transfer apparatus 32 and a processor. The transportation system comprises a rail system 30 and a cargo vehicle 40.

The cargo vehicle 40 is movably provided on rail beams 300 of the rail system 30. The transfer apparatus 32 is used for transferring a goods loading device 33 from a transportation tool to the cargo vehicle 40 and loading the same on the cargo vehicle 40, or alternatively, unloading the goods loading device 33 from the cargo vehicle 40 and conveying the same onto the transportation tool.

The processor is connected to the cargo vehicle 40 and the transfer apparatus 32 so as to control the transfer apparatus 32 to transfer the goods loading device 33, and after the goods loading device 33 is secured on the cargo vehicle 40, to control the cargo vehicle 40 to move on the rail beams.

In some embodiments, when the goods loading device 33 needs to be transferred, the transfer apparatus 32 transfers the goods loading device 33 from a transportation tool to the cargo vehicle 40 and loads the same onto the cargo vehicle 40, and the processor controls the cargo vehicle 40 to move on the rail beams, or the transfer apparatus 32 unloads the goods loading device 33 from the cargo vehicle 40 and conveys the same onto the transportation tool.

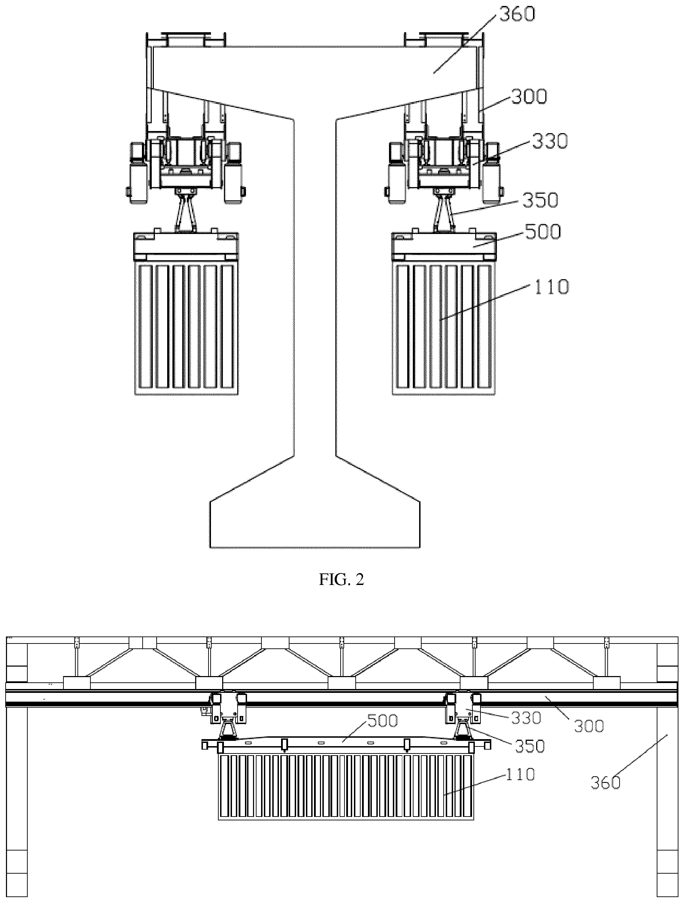

As shown in Figs. 2 and 3, the transportation system further comprises an elevated pillar 360 and a suspension-type turnout 400 abutting the rail beams 300. There are two rail beams 300, which are provided on two opposite sides of the elevated pillar 360.

A lower surface of an upper portion of the elevated pillar 360 are bilaterally symmetrically provided with two rail grooves, which run through the elevated pillar 360 from the front end to the rear end of the elevated pillar 360. The two suspension-type rail beams 300 are mounted in the two rail grooves. The elevated pillar 360 can be disposed in an isolation belt of a road conveniently and stably.

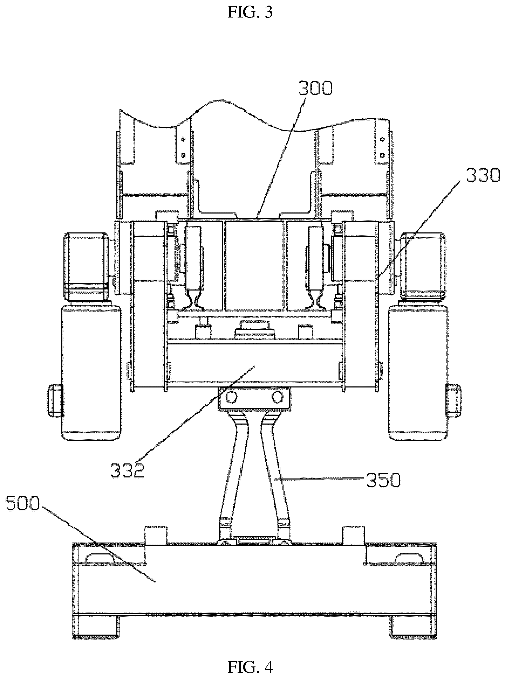

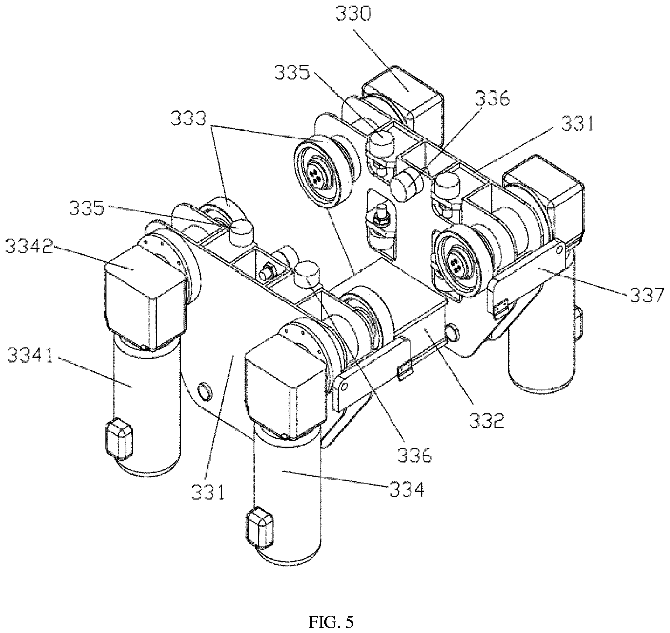

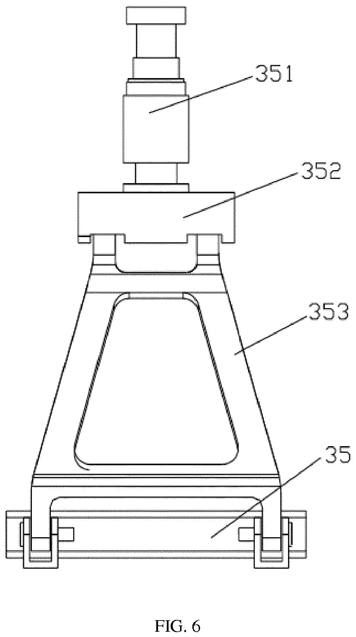

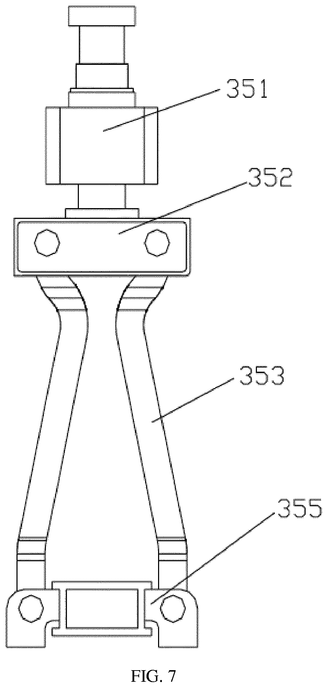

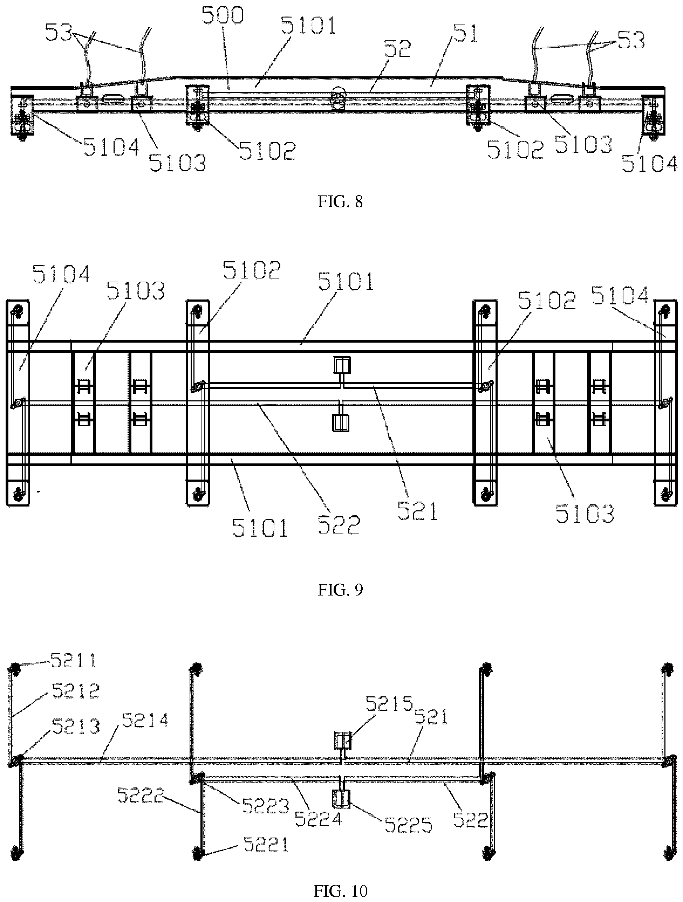

As shown in Figs. 4 to 10, the cargo vehicle 40 comprises a cargo vehicle bogie 330, a suspension device 350, and an integrated spreader 500.

The cargo vehicle bogie 330 comprises: two train frames 331 disposed oppositely to each other, a cross beam 332 fixedly connected to the two train frames 331, at least two travelling wheels 333, and a driving device 334.

In the present embodiment, the train frames 331 adopt a welded-steel structure. Specifically, the cross beam 332 is connected to the two train frames 331 by welding.

The at least two travelling wheels 333 are rotatably disposed on opposite surfaces of the two train frames 331, respectively. In the present embodiment, there are 4 travelling wheels 333, and on each train frame 331 there are provided two travelling wheels 333. The travelling wheels 333 are arranged on travel rails of the suspension-type rail beams. Specifically, in the present embodiment, the travelling wheels 333 adopt steel wheels.

The driving device 334 is fixed on the train frames 331 and connected to the at least two travelling wheels 333 for driving the at least two travel wheels 333 to rotate, such that the at least two travel wheels 333 can move on the travel rails to drive a movement of the cargo vehicle bogie. The processor is connected to the driving device 334 for controlling the driving device 334 to start or shut down.

In the present embodiment, the number of the driving devices 334 is equal to the number of the travelling wheels 333, i.e. one driving device 334 drives one travelling wheel 333. In other embodiment, one driving device 334 may simultaneously drive two or three travelling wheels 333.

The driving device 334 comprises an electric motor 3341 and a gearbox 3342 connecting the electric motor 3341 with the travelling wheels 333. The travelling wheels 333 are disposed on an output shaft of the gearbox 3342, and the electric motor 3341 is connected to an input shaft of the gearbox 3342. Where one electric motor 341 drives two travelling wheels 333, the electric motor 3341 is arranged horizontally, so that design requirements can be satisfied. Likewise, where one electric motor 3341 drives one travelling wheel 333, the electric motor 3341 is arranged vertically, so that design requirements can also be satisfied. The present application includes, but not limited to, these two solutions. Specifically, the processor is connected to the electric motor 3341.

The cargo vehicle bogie 330 further comprises: multiple guide wheels 335, multiple stabilizing wheels 336 and at least two rail cleaning devices 337. In the present embodiment, there are four rail cleaning devices 337.

The multiple guide wheels 335 are respectively fixed onto the two train frames 331 to come into contact with guide rails where the travelling wheels are provided, so as to limit a travelling direction of the travel rails 333. In the present embodiment, a rotation plane of the guide wheels 335 is perpendicular to a rotation plane of the travel rails 333. In addition, in the present embodiment, there are eight guide wheels 335, and four guide wheels 335 are disposed on one train frame 331, specifically, fixed onto the train frame 331 by welding.

The multiple stabilizing wheels 336 are mounted on opposite surfaces of the two train frames 331 to mainly effect a function of tilt prevention.

The two rail cleaning devices 337 are fixed onto the two train frames 331 at positions opposite to the two travel rails respectively, so as to clean the two travel rails while the travelling wheels 333 are travelling. Specifically, the rail cleaning device is welded to an end of the train frame 331. In other embodiment, the rail cleaning device 337 may also be fixed onto the cross beam 332.

Specifically, the travelling wheels 333, the guide wheels 335 and the stabilizing wheels 336 all adopt rimless steel wheels.

One end of the suspension device 350 is disposed on the cross beam 332, and the other end thereof is fixed onto the integrated spreader 500. The suspension device 350 comprises a center pin 351, a top plate 352, a suspension arm 353 and a mounting seat 355. An end of the center pin 351 is fixed onto the top plate 352, and the other end thereof is rotatably disposed on the cross beam 332 so as to arrange the suspension device 350 on the cargo vehicle bogie 330. The suspension arm 353 is disposed between the top plate 352 and the mounting seat 355, and the mounting seat 355 is fixedly connected to the integrated spreader 500.

The integrated spreader 500 comprises: a steel spreader body 51, a group of spin lock mechanisms 52 and a suspension means 53.

The steel spreader body 51 is specifically made of a steel material. By making the steel spreader body 51 of a steel material, the strength of the spreader is increased so as to improve an upper limit of a bearable weight. The steel spreader body 51 comprises at least two side beams 5101, at least two first cross beams 5102, at least two bearing beams 5103 and at least two second cross beams 5104.

The at least two side beams 5101 are oppositely arranged. In the present embodiment, there are two side beams 5101. In other embodiment, there are three, four or more side beams 5101. A specific number of side beams 5101 may be set according to structural strength needs and structural design. Specifically, each of the at least two side beams 5101 comprises an upper cover plate, a lower cover plate and a double-web plate fixed between the upper cover plate and the lower cover plate.

The at least two second cross beams 5104 are respectively disposed at two ends of the at least two side beams 5101, and each of the at least two second cross beams 5104 is fixedly connected to two opposite ends of the at least two side beams 5101. In the present embodiment, the at least two cross beams 5104 are provided as a hollow structure. In other embodiment, the at least two cross beams 5104 may also be provided as a solid structure.

The at least two first cross beams 5102 lie between the at least two second cross beams 5104, and each of the at least two first cross beams 5102 is fixedly connected to the at least two side beams 5101. In the present embodiment, the at least two second cross beams 5104 and the at least two first cross beams 5102 are arranged in parallel and are perpendicular to the at least two side beams 5101. In other embodiment, the at least two second cross beams 5104 and the at least two first cross beams 5102 may also be disposed to form an angle between them, and may also not be perpendicular to the at least two side beams 5101 so long as two ends of the at least two second cross beams 5104 and the at least two first cross beams 5102 are fixed onto the at least two side beams 5101 respectively.

In addition, in the present embodiment, the at least first cross beams 5102 are provided as a hollow structure. In other embodiment, the at least first cross beams 5102 may also be provided as a solid structure.

The at least two bearing beams 5103 are respectively disposed between neighboring second cross beam 5104 and first cross beam 5102 among the at least two second cross beams 5104 and the at least two first cross beams 5102. Specifically, the at least two bearing beams 5103 are provided with snaps.

The suspension means 53 is fixed to the at least two bearing beams 5103, for bearing weights of the spreader body 51 and a goods loading device fixed onto the spreader body.

The group of spin lock mechanisms 52 comprises a first spin lock mechanism 521 and a second spin lock mechanism 522. The processor is connected to the first spin lock mechanism 521 and the second spin lock mechanism 522 for controlling the first spin lock mechanism 521 and the second spin lock mechanism 522 to be locked to or detached from a container.

The first spin lock mechanism 521 comprises a first spin lock 5211 and a first control electric motor 5215, and the first spin lock 5211 is used to lock up the goods loading device that is required to be hoisted. The first control electric motor 5215 controls the first spin lock 5211 to rotate so as to be locked to the goods loading device. Specifically, the processor is connected to the first control electric motor 5215 for controlling the first control electric motor 5215 to start or shut down.

In the present embodiment, the first spin lock mechanism 521 further comprises a first transmission rod 5212, a first transmission mechanism 5213, and a first connection rod 5214. The first spin lock 5211, the first transmission rod 5212, the first transmission mechanism 5213, the first connection rod 5214 and the first control electric motor 5215 are connected in sequence. The first transmission rod 5212 is disposed on the second cross beam 5104. The first control electric motor 5215, after starting, drives the first transmission rod 5212 and the first spin lock 5211 to rotate via the first connection rod 5214 and the first transmission mechanism 5213, such that the goods loading device that is required to be hoisted can be locked up, facilitating to hoist the goods loading device.

In the present embodiment, the second cross beam 5104 is provided as a hollow structure, and the first transmission rod 5212 is disposed within the second cross beam 5104. In other embodiments, when the second cross beam 5104 is provided as a solid structure, the first transmission rod 5212 may also be disposed on the second cross beam 5104.

The second spin lock mechanism 522 comprises a second spin lock 5221 and a second control electric motor 5225. The second spin lock 5221 is used to lock up the goods loading device that is required to be hoisted. The second control electric motor 5225 controls the second spin lock 5221 to rotate so as to be locked to the goods loading device. Specifically, the processor is connected to the second control electric motor 5225 for controlling the second control electric motor 5225 to start or shut down.

In the present embodiment, the second spin lock mechanism 522 further comprises a second transmission rod 5222, a second transmission mechanism 5223, and a second connection rod 5224. The second spin lock 5221, the second transmission rod 5222, the second transmission mechanism 5223, the second connection rod 5224 and the second control electric motor 5225 are connected in sequence. The second transmission rod 5222 is disposed on the first cross beam 5102. The second control electric motor 5225, after starting, drives the second transmission rod 5222 and the second spin lock 5221 to rotate via the second connection rod 5224 and the second transmission mechanism 5223, such that the goods loading device that is required to be hoisted can be locked up, facilitating to hoist the goods loading device.

In the present embodiment, the first cross beam 5102 is provided as a hollow structure, and the second transmission rod 5222 is disposed within the first cross beam 5102. In other embodiment, when the first cross beam 5102 is provided as a solid structure, the second transmission rod 5222 may also be disposed on the first cross beam 5102.

A length of the second connection rod 5224 differs from that of the first connection rod 5214. In the present embodiment, the length of the second connection rod 5224 is smaller than that of the first connection rod 5214. In the present embodiment, the length of the first connection rod 5214 is applicable to hoist the goods loading device with a size of 40 feet or 45 feet, while the length of the second connection rod 5224 is applicable to hoist the goods loading device with a size of 20 feet. In other embodiments, the lengths of the first connection rod 5214 and the second connection rod 5224 may be set to meet the requirements of hoisting a goods loading device having other size, according to needs.

Further, in order to prevent the second spin lock mechanism 522 from interfering with operations of the first spin lock mechanism 521 during the first spin lock mechanism 521 is in use, a position of the second spin lock mechanism 522 in a hoisting direction of the integrated spreader is higher than the first spin lock mechanism, thereby the second spin lock mechanism 522 will not affect hoisting operation of the first spin lock mechanism 521 when the first spin lock mechanism 521 is hoisting the goods loading device. While the second spin lock mechanism is hoisting the goods loading device, since the spin lock 5211 of the first spin lock mechanism 521 is external to the second spin lock mechanism 522, the first spin lock mechanism 521 also will not affect hoisting operations of the second spin lock mechanism 522.

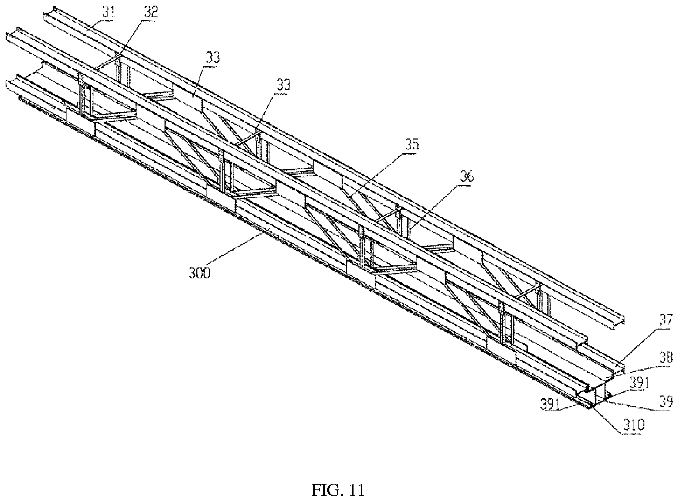

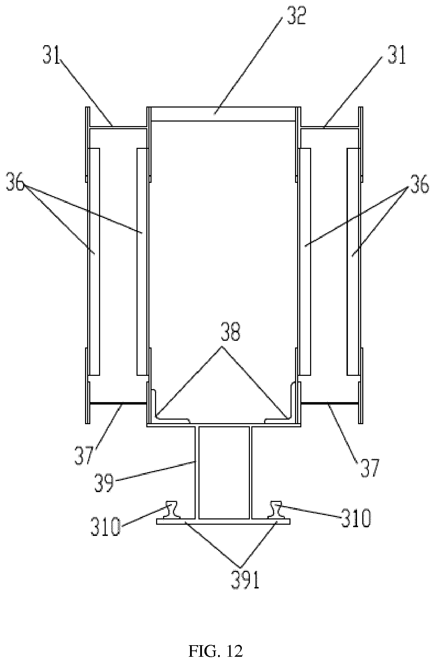

As shown in Figs. 11 and 12, the suspension-type rail beam 300 comprises: two upper longitudinal beams 31 arranged in parallel to each other, two lower longitudinal beams 37 arranged in parallel to each other, vertical couplings 36, vertical oblique couplings 35, a rail support seat 39, and two travel rails 310.

In the present embodiments, the two upper longitudinal beams 31 and the two lower longitudinal beams 37 are all made of H type steels. In other embodiments, the two upper longitudinal beams 31 and the two lower longitudinal beams 37 may be made of round steels, square steels, etc.

The two upper longitudinal beams 31 are fixedly connected via multiple lateral stabilizing reinforcements 32. The upper longitudinal beams 31 and the horizontal stabilizing reinforcements 32 are connected by welding in the present embodiment, or by riveting, screwing and other fixed connection in other embodiment.

The vertical couplings 36 are vertically and fixedly connected to the corresponding upper longitudinal beams 31 and lower longitudinal beams 37, and the vertical oblique couplings 35 are obliquely and fixedly connected to the corresponding upper longitudinal beams 31 and lower longitudinal beams 37.

Specifically, the vertical couplings 36 are connected to the upper longitudinal beams 31 and the lower longitudinal beams 37 via connection plates 33, and the vertical oblique couplings 35 are connected to the upper longitudinal beams 31 and the lower longitudinal beams 37 via connection plates 33 as well. In other embodiment, the vertical couplings 36 and the vertical oblique couplings 35 are directly connected to the upper longitudinal beams 31 and the lower longitudinal beams 37. In the present embodiment, the upper longitudinal beams 31 and the vertical couplings 36 as well as the vertical oblique couplings 35 are connected in riveted structures therebetween, and the lower longitudinal beams 37 and the vertical couplings 36 as well as the vertical oblique couplings 35 are connected in riveted structures therebetween as well. In other embodiment, the upper longitudinal beams 31 and the vertical couplings 36 as well as the vertical oblique couplings 35 may also be connected therebetween by welding or a bolt or the like, and the lower longitudinal beams 37 and the vertical couplings 36 as well as the vertical oblique couplings 35 may also be connected therebetween by welding or a bolt or the like.

The rail support seat 39 is fixed to a side of the two lower longitudinal beams 37 which is far away from the upper longitudinal beam 31. In the present embodiment, a longitudinal coupling 38 is provided between the rail support beam 39 and the two lower longitudinal beams 37. The longitudinal coupling 38 is connected to the lower longitudinal beams 37 and the rail support seat 39 by riveting in the present embodiment, and by welding or screwing or the like in other embodiments.

Two support plates 391 which are respectively opposite to the two lower longitudinal beams 37 are disposed on the rail support seat 39. In the present embodiment, the rail support seat 39 is in a hollow structure. In other embodiment, the rail support seat 39 may also be provided as a solid structure, according to needs.

The two travel rails 310 are disposed on the two support plates 391 respectively, as travel rails for container-transportation trolleys.

Multiple cargo vehicles may be simultaneously provided on the suspension-type rail beam 300 so as to convey goods loading devices and improve the transportation efficiency.

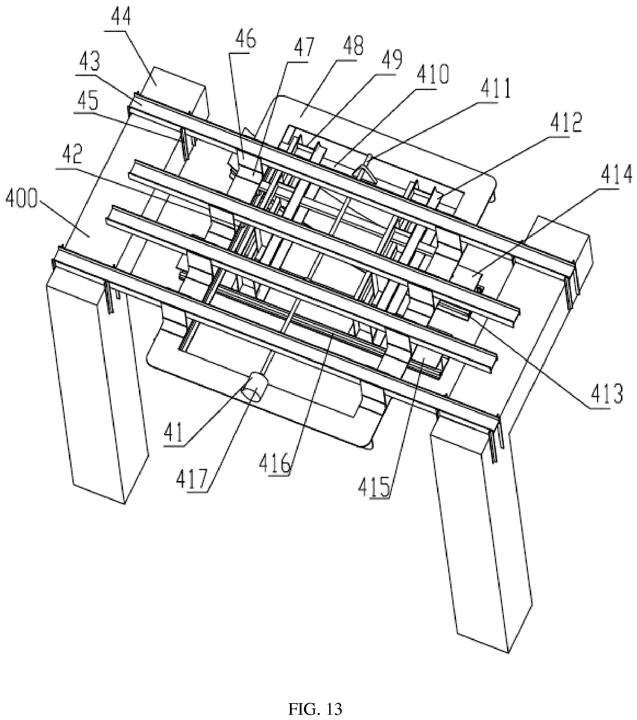

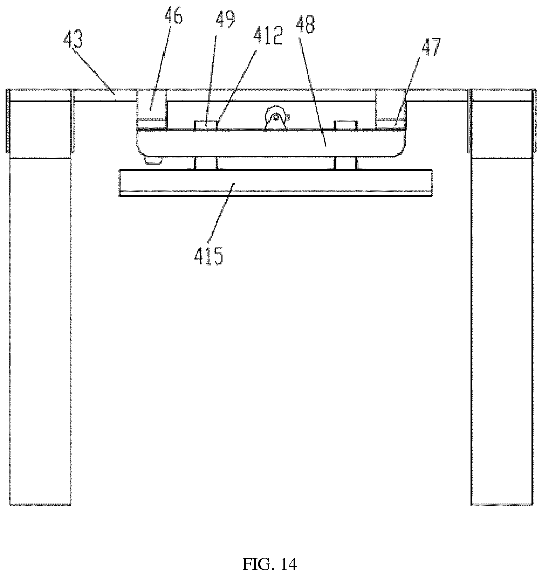

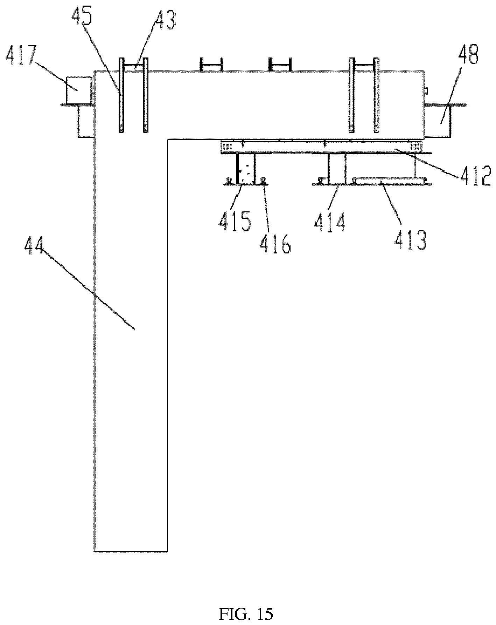

As shown in Figs. 13 to 15, the suspension-type turnout 400 comprises: two bearings 44 arranged oppositely, multiple support beams 43 both ends of each of which are respectively fixed onto the two bearings 44, a travel bracket 48, a travel frame bearing 410, a driving device 41, a cross beam frame 412, an arc travel frame 414, and a straight travel frame 415. The processor is connected to the driving device 41 for controlling the driving device 41 to start or shut down.

In the present embodiment, the bearings 44 are L shape bearings. The two bearings 44 are arranged in parallel to each other, and the multiple support beams 43 are arranged in parallel to one another. In the present embodiment, to increase the firmness of the connection between the bearings 44 and the support beams 43, and a connection angle steel 45 is further provided between the bearings 44 and the multiple support beams 43.

The multiple support beams 43 comprise two outer beams and inner beams disposed between the two outer beams. A length of the inner beams is less than a length of the two outer beams. The two inner beams abut the two upper longitudinal beams of the suspension-type rail beam respectively.

The travel bracket 48 is disposed between the two bearings 44, located under the multiple support beams 43 and fixed onto the multiple support beams 43. In the present embodiment, the travel bracket 48 is in a shape of frame. Specifically, the travel bracket 48 is fixed onto the support beams 43 via the connection plate 46 and the connection angle steel 47. An end of the connection plate 46 is fixed to the support beams 43, and the connection angle steel 47 is fixed between another end of the connection plate 46 and the travel bracket 48.

The travel frame bearing 410 is movably disposed on the travel bracket 48 so as to move relative to the travel bracket 48. In the present embodiment, the travel frame bearing 410 is provided with a roller 42, and the roller 42 is disposed on the travel bracket 48.

The driving device 41 provides power resources for a movement of the travel frame bearing 410 relative to the travel bracket 48. In the present embodiment, the driving device 41 comprises an electric motor 417 and a lead screw 411. The electric motor 417 is fixed onto the travel bracket 48. An end of the lead screw 411 is connected to the electric motor 417, and another end thereof is threadedly connected to the travel frame bearing 410 so as to form a screw thread pair between the lead screw 411 and the travel frame bearing 410. The electric motor 417, after starting, drives the lead screw 411 to rotate, thereby driving the travel frame bearing 410 by the screw thread pair between the lead screw 411 and the travel frame bearing 410 to move relative to the travel bracket 48. In other embodiments, the driving device 41 may also be implemented as a hydraulic cylinder, an air cylinder and the like, wherein a cylinder body of the hydraulic cylinder or the air cylinder is fixed onto the travel bracket 48, and a piston rod of the hydraulic cylinder or the air cylinder is fixed onto the travel frame bearing 410. In addition, the lead screw 411 and the travel frame bearing 410 are not limited to be connected through the screw thread pair, or may be connected in a way of a rack-and-pinion engagement.

In addition, to accomplish a precise locating, preferably, the electric motor 417 is a servo electric motor. The servo electric motor 417 rotates clockwise or counter-clockwise, so that the travel frame bearing 410 makes straight-line motion far away from or close to the servo electric motor 417.

The cross beam frame 412 is fixed onto the travel frame bearing 410 and located under the travel frame bearing 410. The travel frame bearing 410, when moving relative to the travel bracket 48, drives the cross beam frame 412 to move. In the present embodiment, the cross beam frame 412 comprises an upper cross beam, a lower cross beam and a connection channel steel 49. The upper cross beam is fixed onto the travel frame bearing 410 and located above the travel frame bearing 410. The lower cross beam is located under the travel frame bearing 410 and fixedly connected onto the travel frame bearing 410 and the upper cross beam via the connection channel steel 49. There are multiple upper cross beams and lower cross beams, all of which are arranged in parallel to one another.

The arc travel frame 414 and the straight travel frame 415 are fixed under the cross beam frame 412 for abutting a suspension-type rail beam of an electric container-transportation trolley for carrying a goods loading device, so that the electric container-transportation trolley carrying the goods loading device can pass. When two suspension-type rail beams in the same straight line need to be connected, the driving device 41 is started, and the straight travel frame 415 is moved between the two suspension-type rail beams to connect the two suspension-type rail beams. When two suspension-type rail beams forming a certain angle therebetween need to be connected, the driving device 41 is started, and the straight travel frame 415 is moved between the two suspension-type rail beams to connect the two suspension-type rail beams, so that a connection between the two suspension-type rail beams is effected. An arc travel rail 413 for facilitating the cargo vehicle to run is disposed on the arc travel frame 414, and a straight travel rail 416 for facilitating the cargo vehicle to run is disposed on the straight travel frame 415.

An initial position is assumed that the straight travel frame 415 abuts a suspension-type rail beam of an electric container-transportation trolley. When the cargo vehicle needs to pass through a turnout, a control network center does not need to send a control information to control a start of the driving device 41, because at this point the straight travel frame 415 abuts a transportation rail of the cargo vehicle and the cargo vehicles may pass directly. If the cargo vehicle needs to pass through the turnout in an arc line, then the control network center needs to send the control information to control the start of the driving device 41, and the driving device 41 drives the travel frame bearing 410 to move on the travel bracket 48, driving the straight travel frame 415 and the arc travel frame 414 to move relative to the travel bracket 48. Therefore, the straight travel frame 415 is detached from the transportation rail of the electric container-transportation trolley, and the arc travel frame 414 abuts the suspension-type rail beam of the cargo vehicle, so that the cargo vehicle can pass through the turnout in an arc line, and vice versa.

Further, both ends of the integrated spreader 500 are respectively provided with an energy-absorption anti-collision device so as to prevent an impact on a container-transportation vehicle and guarantee a security of the container-transportation vehicle and carried goods in case of emergency. Likewise, safety cables are reserved between the cargo vehicle and the integrated spreader 500, so as to prevent the goods loading device 110 from dropping and guarantee the working safety in case of the suspension device 350 being out of work.

A power supply system of the electric motor 3341 is powered by a third rail contact type conductive rail. Cargo vehicles run in opposite directions on the suspension-type rail beams 300 at two sides of the elevated pillar 360. Therefore, air space is utilized sufficiently without any effect on ground operations inside ports. The appearance of such vehicles can effectively solve existing problems in ports, and moreover, the vehicle has a simple structure and is secure and reliable.

The transfer apparatus 32 may have at least three types of structure as below.

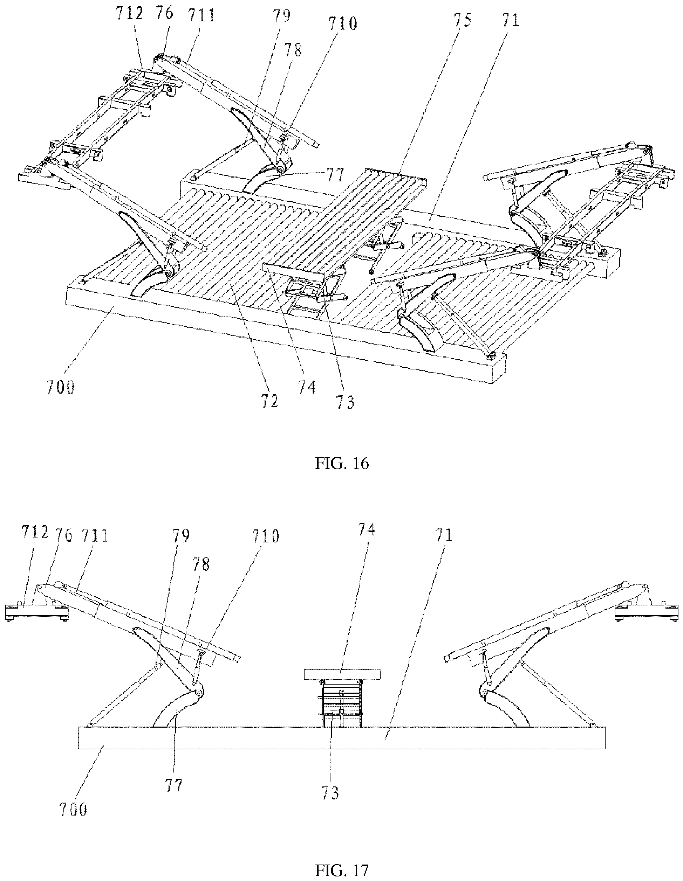

In a first type of structure, as shown in Figs. 16 and 17, the transfer apparatus 32 has a same structure as the transfer apparatus 700. The transfer apparatus 700 at least comprises: a conveyance mechanism, a grab mechanism and a lift mechanism; the grab mechanism places the goods loading device on the conveyance mechanism; the conveyance mechanism transports the goods loading device to the lift mechanism; the lift mechanism lifts or lowers the goods loading device. The processor is communicatively connected to the conveyance mechanism, the grab mechanism and the lift mechanism.

A structure of the conveyance mechanism is illustrated. The conveyance mechanism at least comprises: a first frame 71, a chain, a first group of rotation shafts 72 and a power outputting device; the first group of rotation shafts 72 is disposed on the first frame 71; each rotation shaft of the first group of rotation shafts 72 is provided with gears; the chain is fitted around the gears to drive each rotation shaft of the first group of rotation shafts 72 to rotate; a power output end of the power outputting device is connected to the chain to drive the chain to rotate. A signal output end of the processor is communicatively connected to a signal input end of the power outputting device.

In the present embodiment, the power outputting device is an electric motor.

A structure of the lift mechanism is illustrated. The lift mechanism at least comprises: a telescopic mechanism 73 and a base; a telescopic end of the telescopic mechanism 73 is connected to the base. A signal output end of the processor is communicatively connected to a signal input end of the telescopic mechanism 73.

A structure of the base is illustrated. The base at least comprises: a second frame 74 and a second group of rotation shafts 75; a telescopic end of the telescopic mechanism 73 is connected to the second frame 74, and the second group of rotation shafts 75 is disposed on the second frame 74.

The structure of the base is further illustrated. The base at least further comprises: a sensing element for sensing whether the goods loading device reaches a predefined position; the sensing element is disposed on the base. A signal output end of the sending element is connected to a signal input end of the processor.

In the present embodiment, the sensing element comprises: a displacement sensor and/or an infrared sensor or the like.

The structure of the lift mechanism is further illustrated. The lift mechanism at least further comprises: a distance measuring element for sensing an extension amount of the telescopic mechanism 73; the distance measuring element is disposed on the telescopic mechanism 73 and/or the base.

A structure of the grab mechanism is illustrated. The grab mechanism at least comprises: a telescopic arm 76, a first support rod 77, a second support rod 78, a first telescopic rod 79, a second telescopic rod 710, a third telescopic rod 711 and a spreader 712; a first end of the first support rod 77 is fixedly connected to the first frame 71, and a second end of the first support rod 77 is hinged to a first end of the second support rod 78; a second end of the second support rod 78 is hinged to the telescopic arm 76; a first end of the first telescopic rod 79 is fixedly connected to the first frame 71, and a second end of the first telescopic rod 79 is hinged to the second support rod 78; a first end of the second telescopic rod 710 is hinged to the first end of the second support rod 78, and a second end of the second telescopic rod 710 is hinged to a first end of the telescopic arm 76; a first end of the third telescopic rod 711 is fixedly connected to the first end of the telescopic arm 76, and a second end of the third telescopic rod 711 is fixedly connected to a second end of the telescopic arm 76; the second end of the telescopic arm 76 is connected to the spreader 712.

In the present embodiment, the first telescopic rod 79, the second telescopic rod 710 and the third telescopic rod 711 may be pneumatic rods or hydraulic rods, and embodiments of the present invention are not intended to limit how the telescopic rod is driven.

To achieve an automation functionality of embodiments of the present invention, at least a controller is further provided. A signal input end of the controller is communicatively connected to respective signal output ends of the sensing element and the distance measuring element, and a signal output end of the controller is communicatively connected to respective signal input ends of the telescopic mechanism 73, the power outputting device, the first telescopic rod 79, the second telescopic rod 710, the third telescopic rod 711 and the spreader 712. The controller controls the telescopic mechanism 73, the power outputting device, the first telescopic rod 79, the second telescopic rod 710, the third telescopic rod 711 and the spreader 712 to work as required.

To achieve a failure warning functionality of embodiments of the present invention, at least a warning device is further provided. A signal input end of the warning device is communicatively connected to the signal output end of the controller.

In the present embodiment, the warning device comprises a buzzer, an indicator light, etc.

According to embodiments of the present invention, before work, first it should be guaranteed that the conveyance mechanism is fixed to the ground right under the rail beam of the sky rail-based multimodal transportation interworking system, and an axis of the rotation shaft in the conveyance mechanism is perpendicular to the rail, and center lines of the conveyance mechanism and the rail are on a same vertical plane. The lift mechanism is fixed to the concrete ground and disposed in the middle of the conveyance mechanism. When the lift mechanism is at an initial position, the second group of rotation shafts 75 of the lift mechanism and the first group of rotation shafts 72 of the conveyance mechanism are on a same horizontal plane.

By means of embodiments of the present invention, a procedure for transferring a goods loading device from a container truck or a railway flatcar to a sky rail-based multimodal transportation interworking system is as below:

The third telescopic rod 711 extends to drive the telescopic arm 76 to stretch. In the meantime, the first telescopic rod 79 retracts, and the second telescopic rod 710 also retracts, so that the spreader 712 moves to a place right above the goods loading device. Then, the second telescopic rod 710 extends, so that the spreader 712 is lowered to a lifting position where a lock of the spreader 712 is inserted into the goods loading device. The second telescopic rod 710 stops working, and the lock of the spreader 712 works to grab and lock the goods loading device. Next, the first telescopic rod 79 extends, and the second telescopic rod 710 retracts, so that the goods loading device is detached from the container truck or railway flatcar and rises to a certain height. The third telescopic rod 711 retracts, driving the telescopic arm 76 to move towards the conveyance mechanism. Afterwards, the first telescopic rod 79 retracts, and the second telescopic rod 710 extends, so that the goods loading device is lowered onto the first group of rotation shafts 72. The spreader 712 is unlocked, the first telescopic rod 79 extends, the second telescopic rod 710 retracts, and the spreader 712 is hoisted to a certain height so that the spreader 712 is completely detached from the goods loading device placed on the first group of rotation shafts 72 and causes no interference when the goods loading device makes horizontal movement. Subsequently, the first group of rotation shafts 72 starts to rotate, driving the goods loading device to move onto the second frame 74. When the sensing element senses the goods loading device, which indicates that the goods loading device completely lies on the second frame 74. At this point, the first group of rotation shafts 72 stops working, the telescopic mechanism 73 starts to move upwards to a working position, and the cargo vehicle on the rail of the sky rail-based multimodal transportation interworking system grabs and locks the goods loading device. The telescopic mechanism 73 starts to move downwards to the initial position. So far, the entire procedure that the goods loading device is transferred from the container truck or railway flatcar to the sky rail-based multimodal transportation interworking system is completed. It is noteworthy that whether the telescopic mechanism 73 fails may be judged by the distance measuring element measuring an extension amount of the telescopic mechanism 73 and sending the measured extension amount to the controller. If the telescopic mechanism 73 fails, then the warning device sends a failure warning.

A procedure for transferring the goods loading device from the sky rail-based multimodal transportation interworking system to the container truck or railway flatcar is reverse to the procedure described above and thus is not detailed.

Note that pairs of symmetrically distributed grab mechanisms may be provided as required, so as to improve the stability of grabbing.

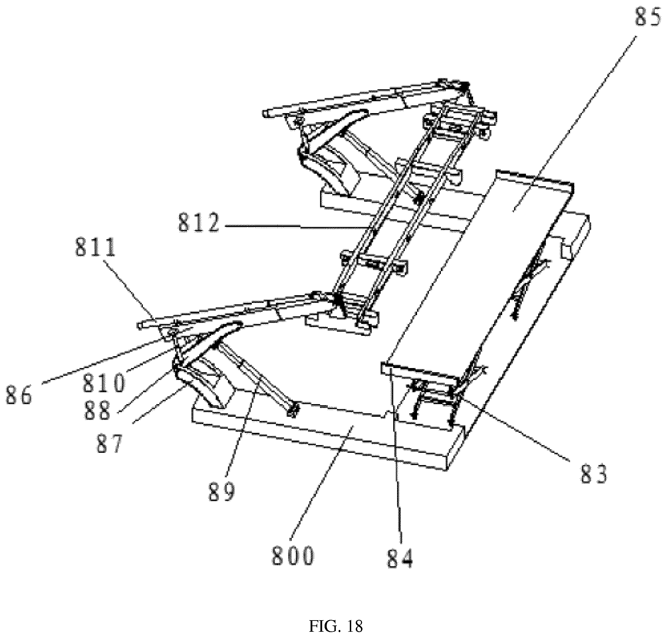

In a second type of structure, as shown in Fig. 18, the transfer apparatus 32 has a same structure as the transfer apparatus 800. The transfer apparatus 800 at least comprises: a grab mechanism and a lift mechanism; the grab mechanism places the goods loading device on the lift mechanism; the lift mechanism lifts or lowers the goods loading device. A processor is communicatively connected to the conveyance mechanism, the grab mechanism and the lift mechanism.

A structure of the lift mechanism is illustrated. The lift mechanism at least comprises: a telescopic mechanism 83 and a base; a telescopic end of the telescopic mechanism 83 is connected to the base.

A structure of the base is illustrated. The base at least comprises: a frame 84 and a support table 85; a telescopic end of the telescopic mechanism 83 is connected to the frame 84; the support table 85 is disposed on the frame 84.

The structure of the base is further illustrated. The base further comprises at least: a sensing element for sensing whether the goods loading device reaches a predefined position; the sensing element is disposed on the base. A signal output end of the sensing element is connected to a signal input end of the processor.

In the present embodiment, the sensing element comprises: a displacement sensor and/or an infrared sensor or the like.

The structure of the lift mechanism is further illustrated. The lift mechanism further comprises at least: a distance measuring element for sensing an extension amount of the telescopic mechanism 83; the distance measuring element is disposed on the telescopic mechanism 83 and/or the base.

A structure of the grab mechanism is illustrated. The grab mechanism at least comprises: a telescopic arm 86, a first support rod 87, a second support rod 88, a first telescopic rod 89, a second telescopic rod 810, a third telescopic rod 811 and a spreader 812; a first end of the first support rod 87 is fixedly connected to the first frame 81, and a second end of the first support rod 87 is hinged to a first end of the second support rod 88; a second end of the second support rod 88 is hinged to the telescopic arm 86; a first end of the first telescopic rod 89 is fixedly connected to the first frame 81, and a second end of the first telescopic rod 89 is hinged to the second support rod 88; a first end of the second telescopic rod 810 is hinged to the first end of the second support rod 88, and a second end of the second telescopic rod 810 is hinged to a first end of the telescopic arm 86; a first end of the third telescopic rod 811 is fixedly connected to the first end of the telescopic arm 86, and a second end of the third telescopic rod 811 is fixedly connected to a second end of the telescopic arm 86; the second end of the telescopic arm 86 is connected to the spreader 812.

In the present embodiment, the first telescopic rod 89, the second telescopic rod 810 and the third telescopic rod 811 may be pneumatic rods or hydraulic rods, and embodiments of the present invention are not intended to limit how the telescopic rod is driven.

To achieve the automation functionality of embodiments of the present invention, at least a controller is further provided. A signal input end of the controller is communicatively connected to respective signal output ends of the sensing element and the distance measuring element, and a signal output end of the controller is communicatively connected to respective signal input ends of the telescopic mechanism 83, the first telescopic rod 89, the second telescopic rod 810, the third telescopic rod 811 and the spreader 812. The controller controls the telescopic mechanism 83, the first telescopic rod 89, the second telescopic rod 810, the third telescopic rod 811 and the spreader 812 to work as required.

To achieve a failure warning functionality of embodiments of the present invention, at least a warning device is further provided. A signal input end of the warning device is communicatively connected to a signal output end of the controller.

In the present embodiment, the warning device comprises: a buzzer, an indicator light, etc.

By means of embodiments of the present invention, a procedure for transferring a goods loading device from a container truck or a railway flatcar to a sky rail-based multimodal transportation interworking system is as below:
the third telescopic rod 811 extends to drive the telescopic arm 86 to stretch. In the meantime, the first telescopic rod 89 retracts, and the second telescopic rod 810 also retracts, so that the spreader 812 moves to a place right above the goods loading device. Then, the second telescopic rod 810 extends, so that the spreader 812 is lowered to a lifting position where a lock of the spreader 812 is inserted into the goods loading device. The second telescopic rod 810 stops working, and a lock of the spreader 812 works to grab and lock the goods loading device. Next, the first telescopic rod 89 extends, and the second telescopic rod 810 retracts, so that the goods loading device is detached from the container truck or railway flatcar and rises to a certain height. The third telescopic rod 811 retracts, driving the telescopic arm 86 to move towards the lift mechanism. Afterwards, the first telescopic rod 89 retracts, and the second telescopic rod 810 extends, so that the goods loading device is lowered onto the frame 84. When the sensing element senses the goods loading device, which indicates the goods loading device completely lies on the frame 84. At this point, the spreader 812 is unlocked, the telescopic mechanism 83 starts to move upwards to a working position, and the cargo vehicle on the rail beam of the sky rail-based multimodal transportation interworking system grabs and locks the goods loading device. The telescopic mechanism 83 starts to move downwards to the initial position. So far, the entire procedure that the goods loading device is transferred from the container truck or railway flatcar to the sky rail-based multimodal transportation interworking system is completed. It is noteworthy that whether the telescopic mechanism 83 fails may be judged by the distance measuring element measuring an extension amount of the telescopic mechanism 83 and sending the measured extension amount to the controller. If the telescopic mechanism 83 fails, the warning device sends a failure warning.

A procedure for transferring the goods loading device from the sky rail-based multimodal transportation interworking system to the container truck or railway flatcar is reverse to the procedure described above and thus is not detailed.

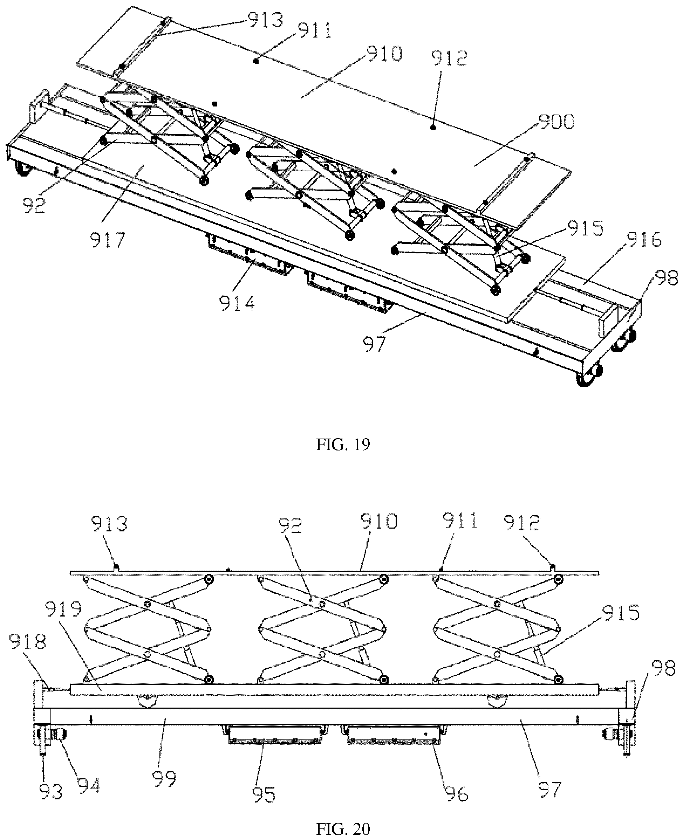

In a third type of structure, as shown in Figs. 19 and 20, the transfer apparatus comprises: an underframe 99, a lift mechanism 92, a lifting table 910, a lift driving device 914, multiple travel wheels 93, a travel driving device 94, and a translation device 917. A processor is communicatively connected to the lift driving device 914 and the travel driving device 94.

The translation device 917 may be movably disposed on the underframe 99. Specifically, the translation device 917 comprises a translation plate 919 and a translation driving device 918. The translation plate 919 is located between the lift mechanism 92 and the underframe 99. One end of the translation driving device 918 is fixed to the translation plate 919, and the other end thereof is fixed to the underframe 99. The translation driving device 918 is used to drive the translation plate 919 to translate on the underframe 99. In the present embodiment, a movement direction of the translation plate 919 is different from that of the underframe 99. Specifically, the movement direction of the translation plate 919 is perpendicular to that of the underframe 99. The translation driving device 918 may be implemented as a hydraulic cylinder, an air cylinder, or a combination of an electric motor and rack and pinion. The processor is connected to the translation driving device.

The lift mechanism 92 is connected between the translation device 917 and the lifting table 910. By adjusting the lift mechanism 92, a distance between the translation device 917 and the lifting table 910 may be adjusted. In the present embodiment, the lift mechanism 92 is provided as an X-shape structure.

The lift driving device 914 is connected to the lift mechanism 92, and drives the lift mechanism 92 to raise or lower the lifting table 910 after the lift driving device 914 is started. The lift driving device comprises a lifting motor 95, a hydraulic station 96 connected to the lifting motor 95, a hydraulic cylinder 915 connecting the hydraulic station 96 to the lift mechanism 92.

The lifting table 910 is used to carry the goods loading device. In the present embodiment, the lifting table 910 is provided as a flat plate shape. A first group of locks 911, a second group of locks 912 and two protruding beams 913 are provided on a surface of the lifting table 910 which is opposite to the lift mechanism 92, i.e. a surface for carrying the goods loading device. Specifically, the first group of locks 911 consists of four embosses which are snap-fastened to the bottom of the goods loading device so as to prevent displacement of the goods loading device relative to the lifting table 910 due to vibration and diversion during transportation. The second group of locks 912 is external to the first group of locks 911.

The two protruding beams 913 are provided at two ends of the lifting table 910 respectively and located external to the first group of locks 911. The second group of locks 912 is provided on the two protruding beams 913, so that a height of the second group of locks 912 is higher than that of the first group of locks 911. In other embodiments, the two protruding beams 913 may not be provided, but multiple bumps may be provided, so that the height of the second group of locks 912 is higher than that of the first group of locks 911.

Thereby, when the goods loading device with a small size such as 20 feet is placed on the lifting table 910, a bottom of the 20-foot goods loading device is snap-fastened to the first group of locks 911. Since the second group of locks 912 is located external to the first group of locks 911, even though the height of the second group of locks 912 is higher than that of the first group of locks 911, the second group of locks 912 will not interfere with the 20-foot goods loading device, thereby causing no impact on the transportation of the goods loading device.

If the goods loading device with a larger size such as 40 feet or 45 feet is placed on the lifting table 910, since the height of the second group of locks 912 is higher than that of the first group of locks 911, a bottom of the 40 or 45-foot goods loading device can also be snap-fastened to the second group of locks 912 without any effect from the first group of locks 911. Therefore, while the goods loading device is prevented from displacement relative to the lifting table 910, an requirement of transporting different sizes of goods loading devices can be satisfied.

The multiple travel wheels 93 are fixed beneath the underframe 99, and drive the transfer apparatus to move when the multiple travel wheels 93 rotate. In the present embodiment, there are 4 travel wheels 93, which are disposed at two ends of the underframe 99 respectively.

The travel driving device 94 is fixed onto the underframe 99 and connected to the travel wheels 93 for driving the travel wheels to rotate. In the present embodiment, the number of the travel driving devices 94 is equal to that of the travel wheels 93, i.e. one driving device 94 drives one travel wheel 93. In other embodiments, one driving device 94 may also drive two travel wheels 93, three travel wheels 93, four travel wheels 93, etc. In the present embodiment, the driving device 94 is an electric motor which is powered by storage batteries. The storage batteries may be provided at the bottom or upper portion of the underframe 99 as required.

In the present embodiment, to increase a strength of the underframe 99, the underframe 99 is provided as an all welded steel structure. Specifically, the underframe 99 comprises: at least two end beams 98, at least two side beams 97, multiple cross beams (not shown) and a bottom plate 916. Two ends of the at least two end beams 98 are connected to two ends of the at least two side beams 97 respectively; the multiple cross beams are disposed between the at least two end beams 98, and two ends of the multiple cross beams are connected to the at least two side beams 97 respectively. The bottom plate 916 is fixed onto the at least two end beams 98, the at least two side beams 97 and the multiple cross beams. In other embodiments, the bottom plate 916 may not be provided. Further, in the present embodiment, a travelling direction of the multiple travel wheels 93 is parallel to a length direction of the end beam 98.

The travel wheel 93 may be provided as a rubber wheel or a universal wheel, the kinetic energy of the transfer apparatus may be provided by a super capacitor, and a quick charging pile may be arranged at a start position or a specified position.

A goods loading device transfer operation procedure for transporting a goods loading device 33 from a port goods loading device dock to a railway, road or air logistics center and other goods loading device logistics center according to embodiments of the present invention is as below:
(1) a grab mechanism of a transfer apparatus 32 at a shipment place receives a C0001# goods loading device 33 (it is assumed that the goods loading device 33 is numbered as C0001#) from a dockside loading and unloading crane at a port goods loading device dock, and a conveyance mechanism of the transfer apparatus 32 transports the C0001# goods loading device 33 to a loading & unloading place for goods loading devices where a cargo vehicle stops within a short distance, and then the lift mechanism of the transfer apparatus 32 lifts the C0001# goods loading device 33 to an appropriate height;
(2) the cargo vehicle 31 on the rail system 30 is controlled by a processor to run to the loading & unloading place, and a spreader 29 of the cargo vehicle 31 is utilized to grab the C0001# goods loading device 33 and automatically transport the same along the rail beam to a specified unloading place for the goods loading device in a multimodal transportation logistics center;
(3) the C0001# goods loading device 33 is received from the cargo vehicle 31 by the lift mechanism of the transfer apparatus 32 at the unloading place and transferred by the conveyance mechanism and the grab mechanism of the transfer apparatus 32 to a road container truck or a railway goods loading device transport vehicle which stops at the unloading place in advance. At this point, the procedure for transporting the C0001# goods loading device 33 from the port to the multimodal transportation logistics center according to embodiments of the present invention ends.

By means of embodiments of the present invention, a goods loading device 33 may also be transported from a railway, road or air goods loading device logistics center to a port goods loading device dock, a specific operation procedure of which is in a reverse order with respect to the foregoing operation procedure and thereby is not illustrated here.

### Technical Effects

By a rail system 30 connecting various ports with railway and air logistics centers, and a processor controlling a transfer apparatus 32 to transfer a goods loading device 33 and controlling a cargo vehicle 31 to move on the rail system 30 after the goods loading device 33 is secured onto the cargo vehicle 31, a multimodal transportation between ports and railway, air logistics centers is achieved. In addition, by replacing road goods loading device transportation trucks with the rail system, not only the transport efficiency is increased, but also the pressure on the ground transportation is reduced and the environment is also protected.

By means of a sky rail system 30 according to embodiments of the present invention, interconnecting and interworking between various goods loading device distribution centers may be achieved, and harmonious connection between rail, water, road and air logistics systems is realized, completely meeting "zero-distance transfer and seamless connection" requirements, and sufficiently releasing the ground transportation capacity. Embodiments of the present invention completely conform to the national strategy on vigorous development of multimodal transportation and provide an overall solution for intelligent and efficient transfer of goods loading device multimodal transportation.

While the preferred embodiments of the present invention have been described, those skilled in the art may make other alterations and modifications to these embodiments once learning the basic creative concept. Therefore, the claims as appended are intended to be construed as including the preferred embodiments and all alterations and modifications which fall within the scope of the present invention.

The scope of protection is defined by the appended claims.

## Claims

1. A sky rail-based multimodal transportation interworking system, at least comprising an elevated pillar (360), a rail system (30), a cargo vehicle (40), a transfer apparatus (32) and a processor, wherein
a rail beam (300) is provided on the elevated pillar (360);
the cargo vehicle (40) is movably provided on a rail beam (300) of the rail system (30);
the transfer apparatus (32) is used for transferring a goods loading device (33) from a transportation tool to the cargo vehicle (40) and loading the goods loading device (33) onto the cargo vehicle (40), or unloading the goods loading device (33) from the cargo vehicle (40) and conveying the goods loading device (33) onto the transportation tool;
the processor is connected to the cargo vehicle ( 40) and the transfer apparatus (32) so as to control the transfer apparatus (32) to transfer the goods loading device (33), and to control the cargo vehicle (40) to move on the rail beam (300) after the goods loading device (33) is secured onto the cargo vehicle (40);
wherein, as the goods loading device (33) needs to be transferred, the transfer apparatus (32) transfers the goods loading device (33) from the transportation tool to the cargo vehicle (40) and loads the goods loading device (33) onto the cargo vehicle (40), and the processor controls the cargo vehicle ( 40) to move on the rail beam (300), or the transfer apparatus (32) unloads the goods loading device (33) from the cargo vehicle (40) and conveys the goods loading device (33) onto the transportation tool;
the cargo vehicle (40) comprises a cargo vehicle bogie (330), a suspension device (350), and an integrated spreader (500);
the bogie (330) comprises: two train frames (331) disposed oppositely to each other, a cross beam (332) fixedly connected to the two train frames (331), at least two travelling wheels (333), and a travelling wheel driving device (334); the at least two travelling wheels (333) are rotatably disposed on opposite surfaces of the two train frames (331), respectively; the travelling wheel driving device (334) is fixed onto the train frame (331) and is connected to the at least two travelling wheels (333) for driving the at least two travelling wheels (333) to rotate;
one end of the suspension device (350) is disposed on the cross beam (332), and the other end thereof is fixed onto the integrated spreader (500);
the suspension-type rail beam (300) is mounted on the elevated pillar (360) on which two travel rails (310) are disposed;
the at least two travelling wheels (333) of the cargo vehicle (40) are provided on the two travel rails (310) respectively; and
the processor is connected to the travelling wheel driving device (334).

2. The interworking system of claim 1, wherein the cargo vehicle bogie (330) further comprises: multiple guide wheels (335) fixed respectively onto the two train frames (331), a rotation plane of the guide wheels (335) being perpendicular to a rotation plane of the travelling wheels (333).

3. The interworking system of claim 1, wherein the cargo vehicle bogie (330) further comprises: multiple stabilizing wheels (336) mounted on opposite surfaces of the two train frames (331).

4. The interworking system of any of claims 1 to 3, wherein the suspension device (350) comprises a center pin (351), a top plate (352), a suspension arm (353), and a mounting seat (355); and wherein one end of the center pin (351) is fixed onto the top plate (352), and the other end thereof is disposed on the cross beam (332); the suspension arm (353) is disposed between the top plate (352) and the mounting seat (355); the mounting seat (355) is fixedly connected to the integrated spreader (500).

5. The interworking system of any of claims 1 to 3, wherein the integrated spreader (500) comprises a steel spreader body (51), a group of spin lock mechanisms (52), and a spreader suspension device;
the group of spin lock mechanisms (52) comprises a first spin lock mechanism (521), and a second spin lock mechanism (522) which is different from the first spin lock mechanism (521) in size; the first spin lock mechanism (521) comprises a first spin lock (5211) and a first control electric motor (5215), and the first control electric motor (5215) controls the first spin lock (5211) to rotate; the second spin lock mechanism (522) comprises a second spin lock (5221) and a second control electric motor (5225), and the second control electric motor (5225) controls the second spin lock (5221) to rotate;
the controller is connected to the first control electric motor (5215) and the second control electric motor (5225).

6. The interworking system of any of claims 1 to 3, wherein the transportation system further comprises a turnout (400) abutting the suspension-type rail beam (300); and wherein the turnout (400) comprises a movable arc travel frame (414), a movable straight travel frame (415) and an abutment driving device; the arc travel frame (414) and the straight travel frame (415) are provided with an arc travel rail (415) and a straight travel rail (416) respectively; the abutment driving device drives the arc travel frame (414) and the straight travel frame (415) to move, so that the arc travel frame (414) or the straight travel frame (415) abuts the suspension-type rail beam (300); and
the controller is connected to the abutment driving device.

7. The interworking system of claim 1, wherein the transfer apparatus (32) at least comprises a conveyance mechanism, a grab mechanism and a lift mechanism; the grab mechanism suitable for placing the goods loading device (33) on the conveyance mechanism; the conveyance mechanism suitable for transporting the goods loading device (33) to the lift mechanism; the lift mechanism suitable for raising or lowering the goods loading device (33), and suitable for loading the goods loading device (33) onto or unloading the goods loading device (33) from the cargo vehicle (40); and the processor is communicatively connected to the conveyance mechanism, the grab mechanism and the lift mechanism.

8. The interworking system of claim 7, wherein the conveyance mechanism at least comprises: a first frame (71), a chain, a first group of rotation shafts (72) and a power outputting device; the first group of rotation shafts (72) is disposed on the first frame (71); each rotation shaft of the first group of rotation shafts (72) is provided with a gear; the chain is fitted around the gears to drive each rotation shaft of the first group of rotation shafts (72) to rotate; and a power output end of the power outputting device is connected to the chain.

9. The interworking system of claim 1, wherein the transfer apparatus (32) comprises: an underframe (99), a lifting device (92), a lifting table (910), a lift driving device (914), multiple travel wheels (93), and a travel driving device (94); and wherein
the lifting device (92) is connected between the underframe (99) and the lifting table (910);
the lift driving device (914) is connected to the lifting device (92) for driving the lifting 30 device (92) to raise or lower the lifting table (910);
the multiple travel wheels (93) are fixed under the underframe (99);
the travel driving device (94) is fixed on the underframe (99) and connected to the travel wheels (93), for driving the travel wheels (93) to rotate; and
the processor is communicatively connected to the lift driving device (914) and the travel driving device (94).

## Patentansprüche

1. Seilbahnbasiertes multimodales Transportverbindungssystem, mindestens umfassend ein erhöhte Säule (360), ein Schienensystem (30), ein Frachtfahrzeug (40), ein Übertragungsgerät (32) und einen Prozessor, wobei
ein Schienenträger (300) auf der erhöhten Säule (360) bereitgestellt ist;
das Frachtfahrzeug (40) beweglich auf einem Schienenträger (300) des Schienensystems (30) bereitgestellt ist;
das Übertragungsgerät (32) verwendet wird, um eine Warenladevorrichtung (33) von einem Transportwerkzeug auf das Frachtfahrzeug (40) zu übertragen und die Warenladevorrichtung (33) auf das Frachtfahrzeug (40) zu laden oder die Warenladevorrichtung (33) vom Frachtfahrzeug (40) zu entladen und die Warenladevorrichtung (33) auf das Transportwerkzeug zu fördern;
der Prozessor mit dem Frachtfahrzeug (40) und dem Übertragungsgerät (32) verbunden ist, um das Übertragungsgerät (32) zu steuern und die Warenladevorrichtung (33) zu übertragen und das Frachtfahrzeug (40) zu steuern, um den Schienenträger (300) zu bewegen, nachdem die Warenladevorrichtung (33) an das Frachtfahrzeug (40) gesichert ist;
wobei, wenn die Warenladevorrichtung (33) übertragen werden muss, das Übertragungsgerät (32) die Warenladevorrichtung (33) vom Transportwerkzeug an das Frachtfahrzeug (40) überträgt und die Warenladevorrichtung (33) auf das Frachtfahrzeug (40) lädt, und der Prozessor das Ladefahrzeug (40) steuert, um den Schienenträger (300) zu bewegen, oder das Übertragungsgerät (32) die Warenladevorrichtung (33) vom Frachtfahrzeug (40) entlädt und die Warenladevorrichtung (33) auf das Transportwerkzeug überträgt;
das Frachtfahrzeug (40) ein Frachtfahrzeug-Drehgestell (330), eine Aufhängevorrichtung (350) und einen integrierten Spreizer (500) umfasst;
das Drehgestell (330) Folgendes umfasst: zwei Zugrahmen (331), die einander gegenüberliegend angeordnet sind, einen Querträger (332), der fest mit den zwei Zugrahmen (331) verbunden ist, mindestens zwei Laufräder (333) und eine Laufrad-Antriebsvorrichtung (334); die mindestens zwei Laufräder (333) jeweils drehbar auf gegenüberliegenden Flächen der zwei Zugrahmen (331) angeordnet sind; die Laufrad-Antriebsvorrichtung (334) auf den Zugrahmen (331) befestigt ist und mit den mindestens zwei Laufrädern (333) verbunden ist, um die mindestens zwei Laufräder (333) in Drehung zu versetzen;
ein Ende der Aufhängevorrichtung (350) auf dem Querträger (332) angebracht ist und das andere Ende davon auf dem integrierten Spreizer (500) befestigt ist;
der aufhängeartige Schienenträger (300) auf der erhöhten Säule (360) montiert ist, auf der zwei Fahrschienen (310) angeordnet sind;
die mindestens zwei Laufräder (333) des Frachtfahrzeugs (40) jeweils auf den zwei Fahrschienen (310) angeordnet sind; und
der Prozessor mit der Laufrad-Antriebsvorrichtung (334) verbunden ist.

2. Verbindungssystem nach Anspruch 1, wobei das Frachtfahrzeug-Drehgestell (330) weiter Folgendes umfasst: zahlreiche Führungsräder (335), die jeweils auf die zwei Zugrahmen (331) befestigt sind, wobei eine Drehebene der Führungsräder (335) senkrecht zu einer Drehebene der Laufräder (333) ist.

3. Verbindungssystem nach Anspruch 1, wobei das Frachtfahrzeug-Drehgestell (330) weiter Folgendes umfasst: zahlreiche Stabilisierungsräder (336), die auf gegenüberliegenden Flächen der zwei Zugrahmen (331) montiert sind.

4. Verbindungssystem nach einem der Ansprüche 1 bis 3, wobei die Aufhängevorrichtung (350) einen zentralen Stift (351), eine obere Platte (352), einen Aufhängearm (353) und einen Montagesitz (355) umfasst; und wobei ein Ende des zentralen Stifts (351) auf der oberen Platte (352) befestigt ist und das andere Ende davon auf dem Querträger (332) angeordnet ist; der Aufhängearm (353) zwischen der oberen Platte (352) und dem Montagesitz (355) angeordnet ist; der Montagesitz (355) fest mit dem integrierten Spreizer (500) verbunden ist.

5. Verbindungssystem nach einem der Ansprüche 1 bis 3, wobei der integrierte Spreizer (500) einen Spreizerkörper aus Stahl (51), eine Gruppe von Drehsicherungsmechanismen (52) und eine Spreizer-Aufhängevorrichtung umfasst;
die Gruppe von Drehsicherungsmechanismen (52) einen ersten Drehsicherungsmechanismus (521) und einen zweiten Drehsicherungsmechanismus (522) umfasst, der eine verschiedene Größe als der erste Drehsicherungsmechanismus (521) aufweist; der erste Drehsicherungsmechanismus (521) eine erste Drehsicherung (5211) und einen ersten elektrischen Steuermotor (5215) aufweist, und der erste elektrische Steuermotor (5215) die erste Drehsicherung (5211) steuert, um sich zu drehen; der zweite Drehsicherungsmechanismus (522) eine zweite Drehsicherung (5221) und einen zweiten elektrischen Steuermotor (5225) umfasst und der zweite elektrische Steuermotor (5225) die zweite Drehsicherung (5221) steuert, um sich zu drehen;
die Steuervorrichtung mit dem ersten elektrischen Steuermotor (5215) und dem zweiten elektrischen Steuermotor (5225) verbunden ist.

6. Verbindungssystem nach einem der Ansprüche 1 bis 3, wobei das Transportsystem weiter eine Weiche (400) umfasst, die an den aufhängeartigen Schienenträger (300) anschlägt; und wobei die Weiche (400) einen beweglichen bogenförmigen Fahrrahmen (414), einen beweglichen geraden Fahrrahmen (415) und eine Anschlag-Antriebsvorrichtung umfasst; der bogenförmige Fahrrahmen (414) und der gerade Fahrrahmen (415) mit einer bogenförmigen Fahrschiene (415) bzw. einer geraden Fahrschiene (416) ausgestattet sind; die Anschlag-Antriebsvorrichtung den bogenförmigen Fahrrahmen (414) und den geraden Fahrrahmen (415) antreibt, um sich zu bewegen, so dass der bogenförmige Fahrrahmen (414) oder der gerade Fahrrahmen (415) an den aufhängeartigen Schienenträger (300) anschlägt;
und die Steuervorrichtung mit der Anschlag-Antriebsvorrichtung verbunden ist.

7. Verbindungssystem nach Anspruch 1, wobei das Übertragungsgerät (32) mindestens einen Fördermechanismus, einen Greifmechanismus und einen Hebemechanismus umfasst; der Greifmechanismus geeignet ist, um die Warenladevorrichtung (33) auf den Fördermechanismus zu platzieren; der Fördermechanismus geeignet ist, um die Warenladevorrichtung (33) zum Hebemechanismus zu transportieren; der Hebemechanismus geeignet ist, um die Warenladevorrichtung (33) zu heben oder zu senken, und geeignet ist, um die Warenladevorrichtung (33) vom Frachtfahrzeug (40) auf die Warenladevorrichtung (33) zu laden oder davon abzuladen; und der Prozessor kommunikativ mit dem Fördermechanismus, dem Greifmechanismus und dem Hebemechanismus verbunden ist.

8. Verbindungssystem nach Anspruch 7, wobei der Fördermechanismus mindestens Folgendes umfasst: einen ersten Rahmen (71), eine Kette, eine erste Gruppe von Drehwellen (72) und eine Leistungsausgangsvorrichtung; die erste Gruppe von Drehwellen (72) auf dem ersten Rahmen (71) angeordnet ist; jede Drehwelle der ersten Gruppe von Drehwellen (72) mit einem Getriebe ausgestattet ist; die Kette um die Getriebe gepasst ist, um jede Drehwelle der ersten Gruppe von Drehwellen (72) in Drehung zu versetzen; und ein Leistungsausgangsende der Leistungsausgangsvorrichtung mit der Kette verbunden ist.

9. Verbindungssystem nach Anspruch 1, wobei das Übertragungsgerät (32) Folgendes umfasst: einen Unterrahmen (99), eine Hebevorrichtung (92), einen Hebetisch (910), eine Hebeantriebsvorrichtung (914), zahlreiche Laufräder (93) und eine Fahrantriebsvorrichtung (94), und wobei
die Hebevorrichtung (92) zwischen dem Unterrahmen (99) und dem Hebetisch (910) verbunden ist;
die Hebeantriebsvorrichtung (914), mit der Hebevorrichtung (92) verbunden ist, um die Hebevorrichtung (92) anzutreiben, um den Hebetisch (910) zu heben oder zu senken;
die zahlreichen Laufräder (93) unter dem Unterrahmen (99) befestigt sind;
die Fahrtantriebsvorrichtung (94) an den Unterrahmen (99) befestigt und mit den Laufrädern (93) verbunden ist, um die Laufräder (93) in Drehung zu versetzen; und
der Prozessor kommunikativ mit der Hebeantriebsvorrichtung (914) und der Fahrtantriebsvorrichtung (94) verbunden ist.

## Revendications

1. Système d'interfonctionnement de transport multimodal à base de rail aérien, comprenant au moins un pilier surélevé (360), un système de rail (30), un véhicule de transport de marchandises (40), un appareil de transfert (32) et un processeur, dans lequel :
une poutre de rail (300) est prévue sur le pilier surélevé (360) ;
le véhicule de transport de marchandises (40) est prévu, de manière mobile, sur une poutre de rail (300) du système de rail (30) ;
l'appareil de transfert (32) est utilisé pour transférer un dispositif de chargement de marchandises (33) d'un outil de transport au véhicule de transport de marchandises (40) et charger le dispositif de chargement de marchandises (33) sur le véhicule de transport de marchandises (40) ou décharger le dispositif de chargement de marchandises (33) du véhicule de transport de marchandises (40) et transporter le dispositif de chargement de marchandises (33) sur l'outil de transport ;
le processeur est connecté au véhicule de transport de marchandises (40) et à l'appareil de transfert (32) afin de commander l'appareil de transfert (32) pour qu'il transfère le dispositif de chargement de marchandises (33) et pour commander le véhicule de transport de marchandises (40) pour qu'il se déplace sur la poutre de rail (300) après que le dispositif de chargement de marchandises (33) a été fixé sur le véhicule de transport de marchandises (40) ;
dans lequel, lorsque le dispositif de chargement de marchandises (33) doit être transféré, l'appareil de transfert (32) transfère le dispositif de chargement de marchandises (33) de l'outil de transport au véhicule de transport de marchandises (40) et charge le dispositif de chargement de marchandises (33) sur le véhicule de transport de marchandises (40), et le processeur commande le véhicule de transport de marchandises (40) pour qu'il se déplace sur la poutre de rail (300), ou l'appareil de transfert (32) décharge le dispositif de chargement de marchandises (33) du véhicule de transport de marchandises (40) et transporte le dispositif de chargement de marchandises (33) sur l'outil de transport ;
le véhicule de transport de marchandises (40) comprend un bogie de véhicule de transport de marchandises (330), un dispositif de suspension (350) et un écarteur intégré (500) ;
le bogie (330) comprend : deux châssis de train (331) disposés à l'opposé l'un de l'autre, une traverse (332) raccordée de manière fixe aux deux châssis de train (331), au moins deux roues mobiles (333), et un dispositif d'entraînement de roue mobile (334) ; les au moins deux roues mobiles (333) sont disposées, en rotation, sur des surfaces opposées des deux châssis de train (331), respectivement ; le dispositif d'entraînement de roue mobile (334) est fixé sur le châssis de train (331) et est raccordé aux au moins deux roues mobiles (333) pour entraîner les au moins deux roues mobiles (333) en rotation ;
une extrémité du dispositif de suspension (350) est disposée sur la traverse (332), et son autre extrémité est fixée sur l'écarteur intégré (500) ;
la poutre de rail de type suspension (300) est montée sur le pilier surélevé (360) sur lequel deux rails de roulement (310) sont disposés ;
les au moins deux roues mobiles (333) du véhicule de transport de marchandises (40) sont prévues sur les deux rails de roulement (310) respectivement ; et
le processeur est connecté au dispositif d'entraînement de roue mobile (334).

2. Système d'interfonctionnement selon la revendication 1, dans lequel le bogie de véhicule de transport de marchandises (330) comprend en outre : plusieurs roues de guidage (335) fixées respectivement sur les deux châssis de train (331), un plan de rotation des roues de guidage (335) étant perpendiculaire à un plan de rotation des roues mobiles (333).

3. Système d'interfonctionnement selon la revendication 1, dans lequel le bogie de véhicule de transport de marchandises (330) comprend en outre : plusieurs roues de stabilisation (336) montées sur des surfaces opposées des deux châssis de train (331).

4. Système d'interfonctionnement selon l'une quelconque des revendications 1 à 3, dans lequel le dispositif de suspension (350) comprend une broche centrale (351), une plaque supérieure (352), un bras de suspension (353) et un siège de montage (355) ; et dans lequel une extrémité de la broche centrale (351) est fixée sur la plaque supérieure (352), et son autre extrémité est disposée sur la traverse (332) ; le bras de suspension (353) est disposé entre la plaque supérieure (352) et le siège de montage (355) ; le siège de montage (355) est raccordé de manière fixe à l'écarteur intégré (500).

5. Système d'interfonctionnement selon l'une quelconque des revendications 1 à 3, dans lequel l'écarteur intégré (500) comprend un corps d'écarteur en acier (51), un groupe de mécanismes de boucle de verrouillage (52), et un dispositif de suspension d'écarteur ;
le groupe de mécanismes de boucle de verrouillage (52) comprend un premier mécanisme de boucle de verrouillage (521), et un second mécanisme de boucle de verrouillage (522) qui est différent du premier mécanisme de boucle de verrouillage (521) du point de vue de la taille ; le premier mécanisme de boucle de verrouillage (521) comprend une première boucle de verrouillage (5211) et un premier moteur électrique de commande (5215) et le premier moteur électrique de commande (5215) commande la première boucle de verrouillage (5211) pour qu'elle tourne ; le second mécanisme de boucle de verrouillage (522) comprend une seconde boucle de verrouillage (5221) et un second moteur électrique de commande (5225) et le second moteur électrique de commande (5225) commande la seconde boucle de verrouillage (5221) pour qu'elle tourne ;
l'organe de commande est raccordé au premier moteur électrique de commande (5215) et le second moteur électrique de commande (5225).

6. Système d'interfonctionnement selon l'une quelconque des revendications 1 à 3, dans lequel le système de transport comprend en outre un branchement (400) venant en butée contre la poutre de rail de type suspension (300) ; et dans lequel le branchement (400) comprend un châssis de roulement en arc mobile (414), un châssis de roulement droit mobile (415) et un dispositif d'entraînement de butée ; le châssis de roulement en arc (414) et le châssis de roulement droit (415) sont prévus avec un rail de roulement en arc (415) et un rail de roulement droit (416) respectivement; le dispositif d'entraînement de butée entraîne le châssis de roulement en arc (414) et le châssis de roulement droit (415) pour qu'ils se déplacent, de sorte que le châssis de roulement en arc (414) ou le châssis de roulement droit (415) vient en butée contre la poutre de rail de type suspension (300) ; et
l'organe de commande est raccordé au dispositif d'entraînement de butée.

7. Système d'interfonctionnement selon la revendication 1, dans lequel l'appareil de transfert (32) comprend au moins un mécanisme de transport, un mécanisme de grappin et un mécanisme de levage ; le mécanisme de grappin étant approprié pour placer le dispositif de chargement de marchandises (33) sur le mécanisme de transport ; le mécanisme de transport étant approprié pour transporter le dispositif de chargement de marchandises (33) jusqu'au mécanisme de levage ; le mécanisme de levage étant approprié pour lever ou abaisser le dispositif de chargement de marchandises (33) et approprié pour charger le dispositif de chargement de marchandises (33) sur ou décharger le dispositif de chargement de marchandises (33) du véhicule de transport de marchandises (40) ; et le processeur est connecté, par voie de communication, au mécanisme de transport, au mécanisme de grappin et au mécanisme de levage.

8. Système d'interfonctionnement selon la revendication 7, dans lequel le mécanisme de transport comprend au moins : un premier châssis (71), une chaîne, un premier groupe d'arbres de rotation (72) et un dispositif de production de puissance ; le premier groupe d'arbres de rotation (72) est disposé sur le premier châssis (71) ; chaque arbre de rotation du premier groupe d'arbres de rotation (72) est prévu avec un engrenage ; la chaîne est montée autour des engrenages pour entraîner chaque arbre de rotation du premier groupe d'arbres de rotation (72) pour qu'ils tournent ; et une extrémité de sortie de puissance du dispositif de production de puissance est raccordée à la chaîne.

9. Système d'interfonctionnement selon la revendication 1, dans lequel l'appareil de transfert (32) comprend : un sous-châssis (99), un dispositif de levage (92), une table de levage (910), un dispositif d'entraînement de levage (914), plusieurs roues mobiles (93) et un dispositif d'entraînement de roulement (94) ; et dans lequel :
le dispositif de levage (92) est raccordé entre le sous-châssis (99) et la table de levage (910) ;
le dispositif d'entraînement de levage (914) est raccordé au dispositif de levage (92) pour entraîner le dispositif de levage (92) pour qu'il lève ou abaisse la table de levage (910) ;
la pluralité de roues mobiles (93) sont fixées sous le sous-châssis (99) ;
le dispositif d'entraînement de roulement (94) est fixé sur le sous-châssis (99) et raccordé aux roues mobiles (93) pour entraîner les roues mobiles (93) pour qu'elles tournent ; et
le processeur est raccordé, par voie de communication, au dispositif d'entraînement de levage (914) et au dispositif d'entraînement de roulement (94).
